# DEMANDE DE BREVET EUROPEEN

(11) **EP 4 372 214 A1**
(43) Date de publication de la demande: **22.05.2024**
(21) Numéro de dépôt: 23209373.2
(22) Date de dépôt: 13.11.2023
(51) Int. Cl.: F01N 1/00, F01N 13/18, B62D 35/02

(54) **DISPOSITIF COMPRENANT UN VOLUME ACOUSTIQUE D ÉCHAPPEMENT D'UN MOTEUR ET UNE STRUCTURE DÉFLECTRICE**

(30) Priorité: 21.11.2022 FR 2212072
(71) Demandeur: Renault s.a.s, 92100 Boulogne Billancourt (FR)
(72) Inventeur: PINSARD, Romain, 78280 GUYANCOURT (FR)

(57) **Abrégé**

Dispositif, apte à être disposé sous le plancher d'un véhicule à moteur, comprenant un volume acoustique (1) atténuant les bruits des gaz d'échappement du moteur qui présente une enveloppe de forme allongée (10) fermée en son extrémité amont par une paroi amont (3), et comprenant une structure déflectrice (2), caractérisé en ce que ladite structure déflectrice est une pièce (2) située au moins en partie sur la face externe de ladite paroi amont du volume acoustique, comportant au moins une partie inférieure déflectrice de forme arrondie (20) s'étendant d'une part en hauteur au moins sur la partie inférieure (300) de la surface externe de ladite paroi amont (3) et d'autre part transversalement à la direction longitudinale de l'enveloppe du volume acoustique, et de convexité tournée en direction opposée à ladite paroi amont.

## Description

La présente invention se rapporte à un dispositif comprenant un volume acoustique d'échappement d'un moteur et une structure déflectrice, pour une ligne d'échappement d'un véhicule automobile.

Un véhicule automobile à moteur à combustion interne comprend classiquement dans sa ligne d'échappement sous son plancher, un volume acoustique qui a pour fonction principale d'atténuer les bruits des gaz émis par le moteur. Classiquement un volume acoustique se présente sous forme d'une enveloppe fermée, de forme globale allongée, et présentant des orifices d'entrée et de sortie. Ladite enveloppe est aménagée intérieurement pour laisser passer les gaz du circuit d'échappement entre lesdits orifices d'entrée et de sortie. Les orifices d'entrée et de sortie sont respectivement raccordés à un tuyau d'entrée et à un ou plusieurs tuyaux de sortie sur le circuit d'échappement.

De par sa forme et son volume, le volume acoustique a un impact négatif sur la pénétration du véhicule dans l'air et entraîne une surconsommation de carburant, et donc une augmentation d'émission de polluants, notamment des rejets de gaz carbonique CO₂.

Lorsque le volume acoustique, situé sous le plancher du véhicule, est agencé longitudinalement dans la partie creuse du tunnel central longitudinal que comprend le plancher, le volume acoustique est particulièrement soumis aux turbulences de l'air arrivant sous le véhicule de sorte que sa résistance à l'air est augmentée. En outre le volume acoustique est particulièrement exposé aux obstacles passant sous le véhicule en circulation, que ce soient des obstacles mobiles ou des obstacles fixes, ce qui peut détériorer le volume acoustique et/ou endommager une partie plus importante de la ligne d'échappement ou décrocher cette dernière.

La demande de brevet FR3077094 décrit un dispositif comprenant un volume acoustique qui présente une enveloppe fermée comprenant un écran isolant thermiquement enveloppant la surface externe de l'enveloppe du volume acoustique et dont une portion est conformée en déflecteur aérodynamique.

Ce dispositif vise à améliorer les performances aérodynamiques du volume acoustique tout en améliorant la protection thermique du plancher contre la chaleur dégagée au niveau du volume acoustique, le dispositif s'installant sous le plancher d'un véhicule à moteur, à proximité du bouclier arrière, orienté sensiblement suivant la direction transversale du véhicule. Il ne vise pas à traiter les problèmes avec les obstacles.

L'invention vise à proposer une solution répondant au besoin d'améliorer les performances aérodynamiques et de comportement face aux obstacles au niveau d'un volume acoustique d'une ligne d'échappement, et en particulier lorsque le volume acoustique, situé sous le plancher du véhicule, est agencé suivant une orientation longitudinale du véhicule, notamment dans la partie tunnel du plancher. A cet effet, l'invention fournit un dispositif, apte à être disposé sous le plancher d'un véhicule à moteur, comprenant un volume acoustique atténuant les bruits des gaz d'échappement du moteur, présentant une enveloppe de forme allongée fermée en son extrémité amont par une paroi amont, et ledit dispositif comprenant une structure déflectrice. Selon l'invention, ladite structure déflectrice est une pièce située au moins en partie sur la face externe de ladite paroi amont du volume acoustique, comportant au moins une partie inférieure déflectrice de forme arrondie. Cette forme arrondie s'étend d'une part en hauteur au moins sur la partie inférieure de la surface externe de ladite paroi amont et d'autre part transversalement à la direction longitudinale de l'enveloppe du volume acoustique, et est de convexité tournée en direction opposée à ladite paroi amont.

Ladite pièce avec une partie inférieure déflectrice de forme arrondie est ainsi apte à dévier l'air arrivant sur le volume acoustique et à le guider sous le volume acoustique et/ou à éviter des obstacles par déviation des obstacles mobiles ou par guidage de la ligne d'échappement au-dessus d'un obstacle fixe.

La notion de « amont » relative à la paroi est définie par rapport à l'arrivée des gaz d'échappement dans le volume acoustique. Cette notion est aussi relative à la notion de « avant » correspond à l'arrivée de l'air sur le dispositif en place sous le plancher du véhicule en marche avant, ou encore par rapport à la direction longitudinale et à l'avant du véhicule. Autrement dit, la paroi amont correspond à la paroi avant qui ferme l'extrémité amont (aussi extrémité avant) de l'enveloppe du volume acoustique.

La notion de « inférieur » est définie par rapport à la position usuelle du volume acoustique et/ou du dispositif disposés sous le plancher du véhicule, soit encore par rapport à la direction verticale du véhicule en position usuelle, reposant sur ses roues. La notion de « inférieur » se réfère aussi à la partie du dispositif en usage qui est la plus près du sol.

De manière préférée, ladite pièce s'étend en hauteur sur au plus la moitié inférieure de la surface externe de ladite paroi amont.

De manière préférée, ladite partie de forme arrondie de la pièce est située dans la moitié inférieure de la pièce (selon la hauteur de la pièce en usage).

De manière préférée, ladite partie de forme arrondie a un rayon de courbure supérieur ou égal à 20 millimètres, de préférence encore supérieur ou égal à 25 millimètres.

En particulier, ladite partie de forme arrondie peut être assimilée à une portion de sphère.

De manière préférée, ladite pièce a une forme fermée sur la surface externe de ladite paroi amont.

De préférence ladite pièce déflectrice est formée d'une coque rapportée sur la face externe de ladite paroi amont dudit volume acoustique.

De préférence, ladite pièce est une coque monobloc.

Avantageusement, ladite pièce est solidarisée de manière amovible à ladite paroi amont.

L'invention a également pour objet un véhicule, en particulier à combustion interne, équipé d'un dispositif comprenant un volume acoustique tel que décrit précédemment, ledit dispositif étant installé extérieurement sous le plancher du véhicule et orienté selon la direction longitudinale du véhicule de sorte que la paroi amont du volume acoustique soit à l'avant du volume acoustique. La paroi amont correspond ainsi à la paroi avant qui ferme l'extrémité avant de l'enveloppe du volume acoustique.

En particulier, ledit dispositif est installé dans la partie creuse du tunnel central longitudinal que comprend le plancher du véhicule.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue en perspective d'un dispositif comprenant un volume acoustique d'échappement d'un moteur et une structure déflectrice selon un mode de réalisation de l'invention, intégré dans une ligne d'échappement d'un moteur thermique représentée partiellement.
[Fig. 2] est une vue partielle et de dessous du dispositif selon la figure 1, intégré dans une ligne d'échappement et implanté sous le plancher d'un véhicule.
[Fig. 3] est une vue en coupe longitudinale dans le plan vertical XZ d'une partie du dispositif illustré sur les figures précédentes.
[Fig. 4] est une vue agrandie et en coupe longitudinale dans le plan vertical XZ d'une partie du dispositif illustré sur les figures précédentes.

Dans la présente description, les termes avant, arrière, supérieur, inférieur, font référence aux directions usuelles du véhicule reposant sur ses roues, et correspondent aux directions du dispositif comprenant un volume acoustique et une structure déflectrice selon l'invention monté sous le plancher du véhicule. Les axes du trièdre orthonormé X, Y, Z, correspondent respectivement à l'axe longitudinal (orienté de l'avant vers l'arrière), transversal (orienté vers la droite du véhicule) et vertical pour un véhicule reposant sur ses roues (position usuelle).

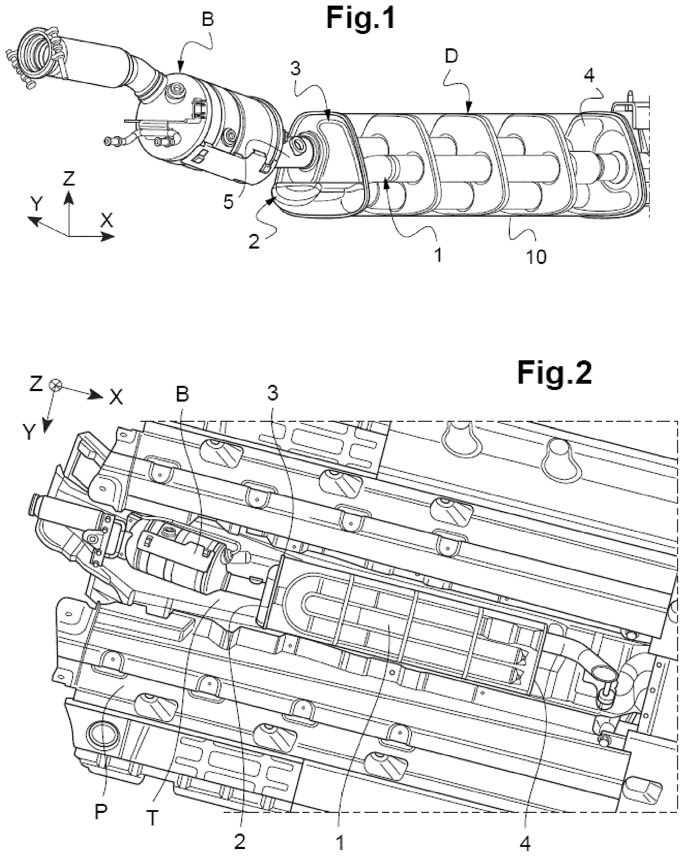

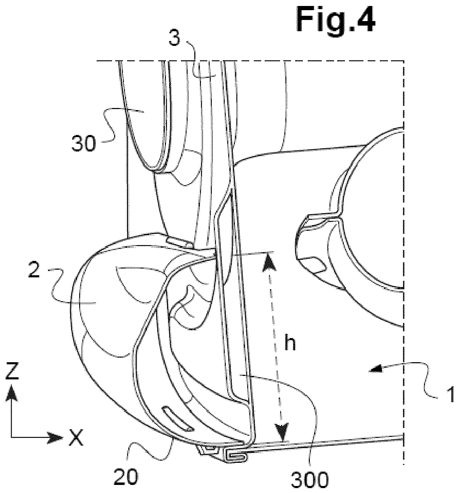

Les figures 1 à 4 vont être commentées ensemble.

La figure 1 représente un dispositif D comprenant un volume acoustique d'échappement d'un moteur et une structure déflectrice 2 selon un mode de réalisation de l'invention. Ce dispositif est intégré dans une ligne d'échappement d'un moteur thermique, représentée partiellement en transparence, comprenant outre le volume acoustique 1, un organe dépolluant B raccordé en amont du volume acoustique, pour traiter les gaz d'échappement en sortie du moteur.

Cette partie de la ligne d'échappement comprenant le dispositif D est représentée en vue de dessous sur la figure 2, installée sous le plancher P du véhicule, dans la partie creuse du tunnel central T que comprend longitudinalement le plancher. Le dispositif comprenant le volume acoustique est ainsi disposé suivant la direction longitudinale (direction X) du véhicule.

Le volume acoustique 1 comporte une enveloppe externe 10 métallique, qui est représentée en transparence sur les figures, afin de montrer les tuyaux intérieurs dans lesquels circulent les gaz d'échappement entrants et sortants.

Ladite enveloppe externe 10 a une forme en volume et globalement allongée selon la direction longitudinale du véhicule. Chacune de ses extrémités longitudinales avant et arrière est fermée par des parois respectivement amont 3 et aval 4, appelées usuellement respectivement coupelle d'entrée et coupelle de sortie par référence au sens de circulation des gaz d'échappement entrant dans et sortant du volume acoustique. La paroi amont 3 correspond ainsi à la paroi avant (ou coupelle d'entrée) qui ferme l'extrémité avant de l'enveloppe du volume acoustique. Selon l'exemple, la paroi amont 3 comprend un orifice d'entrée 30 récepteur d'un tuyau 5 de raccordement à l'organe dépolluant B d'où arrivent les gaz qui entrent dans le volume acoustique.

La structure déflectrice 2 du dispositif comprend essentiellement une pièce sous forme de coque, globalement de forme arrondie, qui est fixée sur la face externe de la paroi amont 3, et en partie inférieure de cette paroi amont. La coque 2 occupe une zone 300 de la paroi amont 3 s'étendant selon la direction verticale (direction Z) sur une portion d'hauteur « h » de ladite paroi amont 3 partant du bord inférieur de l'enveloppe, et selon la direction transversale (direction Y) sur toute la largeur de ladite paroi amont.

La partie basse 20 de la coque, soit la partie inférieure s'étendant sur environ la moitié de la hauteur de la coque, a une forme très arrondie, et de convexité tournée en direction opposée à ladite paroi amont 3, autrement dit de convexité tournée vers l'amont (aussi l'avant) de la paroi amont 3. Cette forme très arrondie de la coque a un rayon de courbure d'environ 25 millimètres ; elle correspond sensiblement à une portion de sphère.

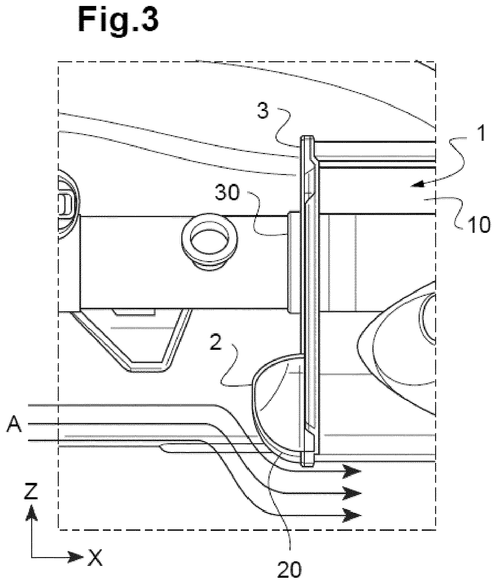

Cette forme très arrondie de la partie basse de la pièce permet la fonction déflectrice. Elle permet de dévier le flux d'air (flèches A sur Fig. 3), arrivant face au volume acoustique lorsque le véhicule roule en marche avant, et permet de le guider en dessous de l'enveloppe 10 du volume acoustique. Ceci améliore la pénétration dans l'air du véhicule et donc minimise l'impact du volume acoustique sur la consommation de carburant.

En outre, cette forme très arrondie permet de gérer les obstacles se présentant sous le véhicule et pouvant heurter la ligne d'échappement, notamment le volume acoustique qui est le point bas de la ligne, soit par déviation des obstacles légers mobiles sous le plancher, soit par déviation et guidage de la ligne d'échappement vers le haut (vers le plancher P) lorsque le volume acoustique du véhicule rencontre un obstacle fixe.

Des essais comparatifs ont montré qu'il est préférable que le rayon de courbure de la forme très arrondie située en partie basse de la coque soit d'au moins 20 millimètres pour avoir un effet déviant d'air et un effet anti-obstacles performants. Plus le rayon de courbure est grand, plus l'efficacité de la forme arrondie est importante. La valeur supérieure du rayon de courbure dépend principalement de la place disponible pour la coque.

Sans la pièce avec cette partie basse très arrondie déflectrice, le volume acoustique, qui correspond au point le plus bas du véhicule et dont notamment la coupelle d'entrée est très plate et très droite, autrement dit disposée à angle droit avec la direction longitudinale du véhicule, serait particulièrement exposée aux turbulences et aux obstacles mobiles ou fixes se présentant sous le véhicule quand le véhicule avance. Avec cette pièce déflectrice 2, le gain en coefficient aérodynamique SCX a été par exemple dimensionné à 0,004m² et le gain en C0₂ est de 0,2 gramme.

Selon l'exemple illustré, le point le plus bas de la coque correspond au point le plus bas du volume acoustique, toutefois elle pourrait si l'agencement du volume acoustique sous le plancher du véhicule le permet sans altérer la garde au sol du véhicule, de fixer la coque en débord de ce point bas du volume acoustique, la coque passerait (légèrement) sous la jonction coupelle-enveloppe.

Par ailleurs la pièce 2 a une forme fermée sur la paroi amont 3, c'est-à-dire que la pièce est formée d'une paroi en tôle ouverte du côté de la paroi amont 3 du volume acoustique, cette dernière venant fermer totalement ladite pièce 2. Cette forme fermée sur la paroi amont permet de minimiser les sifflements qui pourraient être générés par l'air entrant dans la pièce, et d'autre part permet de la protéger de l'entrée de gravillons. La pièce peut aussi comprendre un orifice permettant d'évacuer des liquides qui pourraient y entrer, cet orifice étant de petite dimension pour éviter l'entrée de cailloux par exemple.

En outre cette forme fermée de la pièce 2 sur la paroi amont permet une facilité de fixation de la pièce à la paroi amont, en offrant des zones d'accostage sur tout son pourtour. La pièce est en tôle, et peut être fixée par soudure à la paroi amont 3. Cette pièce déflectrice étant rapportée, par exemple fixée de manière amovible, elle peut être mise ou non en place, ou encore être remplacée, en fonction du besoin du véhicule par le constructeur automobile ou un garagiste.

L'invention permet de minimiser l'impact relatif à la pénétration dans le l'air (coefficient aérodynamique SCx) tout en conservant le volume nécessaire du volume acoustique sans complexifier la coupelle d'entrée, et donc de réduire l'émission de polluants. Elle permet également de gérer les obstacles pouvant se présenter sous le véhicule.

## Revendications

1. Dispositif (D), apte à être disposé sous le plancher d'un véhicule à moteur, comprenant un volume acoustique (1) atténuant les bruits des gaz d'échappement du moteur qui présente une enveloppe de forme allongée (10) fermée en son extrémité amont par une paroi amont (3), et comprenant une structure déflectrice (2), **caractérisé en ce que** ladite structure déflectrice est une pièce (2) située au moins en partie sur la face externe de ladite paroi amont du volume acoustique, comportant au moins une partie inférieure déflectrice de forme arrondie (20) s'étendant d'une part en hauteur au moins sur la partie inférieure (300) de la surface externe de ladite paroi amont (3) et d'autre part transversalement à la direction longitudinale de l'enveloppe du volume acoustique, et de convexité tournée en direction opposée à ladite paroi amont.

2. Dispositif selon la revendication 1, **caractérisé en ce que** ladite pièce déflectrice (2) s'étend en hauteur sur au plus la moitié inférieure de la surface externe de ladite paroi amont (3).

3. Dispositif selon l'une des revendications 1 à 2, **caractérisé en ce que** ladite partie de forme arrondie (20) de la pièce (2) est située dans la moitié inférieure de la pièce.

4. Dispositif selon l'une des revendications 1 à 3, **caractérisé en ce que** ladite partie de forme arrondie (20) a un rayon de courbure supérieur ou égal à 20 millimètres.

5. Dispositif selon l'une des revendications 1 à 4, **caractérisé en ce que** ladite pièce (2) a une forme fermée sur la paroi amont (3).

6. Dispositif selon l'une des revendications 1 à 5, **caractérisé en ce que** ladite pièce (2) est formée d'une coque rapportée sur la face externe de ladite paroi amont (3) du volume acoustique.

7. Dispositif selon l'une des revendications 1 à 6, **caractérisé en ce que** ladite pièce (2) est une coque monobloc.

8. Dispositif selon l'une quelconque des revendications 1 à 7, **caractérisé en ce que** ladite pièce (2) est solidarisée de manière amovible à ladite paroi amont (3).

9. Véhicule automobile à moteur, en particulier à combustion interne, équipé d'un dispositif (D) comprenant un volume acoustique (1) et une structure déflectrice (2) selon l'une quelconque des revendications 1 à 8, ledit dispositif (D) étant installé extérieurement sous le plancher (P) dudit véhicule et orienté selon la direction longitudinale du véhicule de sorte que la paroi amont (3) du volume acoustique soit à l'avant du volume acoustique.

10. Véhicule automobile à moteur selon la revendication 9, **caractérisé en ce que** ledit dispositif est installé dans la partie creuse du tunnel central longitudinal (T) que comprend le plancher du véhicule.
